# EUROPEAN PATENT SPECIFICATION

(11) **EP 3 203 644 B1**
(45) Date of publication and mention of the grant of the patent: **17.07.2019**
(21) Application number: 17162408.3
(22) Date of filing: 11.10.2002
(51) Int. Cl.: H04B 3/54

(54) **METHOD FOR OPERATING A POWERLINE COMMUNICATION NETWORK**
VERFAHREN ZUM BETRIEB EINES STROMLEITUNGSKOMMUNIKATIONSNETZES
PROCÉDÉ DE FONCTIONNEMENT D'UN RÉSEAU DE COURANTS PORTEURS EN LIGNE

(43) Date of publication of application: 09.08.2017
(62) Divisional of application: 02022807.8
(73) Proprietor: Sony Deutschland GmbH, 10785 Berlin (DE)
(72) Inventor: Zumkeller, Markus, 70327 Stuttgart (DE); Schwager, Andreas, 70327 Stuttgart (DE); Buchner, Peter, 70327 Stuttgart (DE)
(74) Representative: Witte, Weller & Partner Patentanwälte mbB

(56) References cited:
- EP-A- 1 014 640
- US-A- 4 479 215

## Description

The invention relates to a method for operating a powerline communication network, in particular for establishing the coexistence of radio signal reception in a powerline communication network for improving the reception quality of a radio receiver.

In the last decades, the importance of electronic communication has been steadily increased. As a consequence, a lot of research work has been done in order to develop new communication technologies like the internet, mobile communication systems and the like.

One possible communication system is the powerline communication system which shows the advantages that it is installed and used in almost every country and that it is very easily accessible.

However, when operating a powerline communication network, the following problem occurs that normally, information is transmitted via a powerline communication network using frequency ranges up to 150 kHz. However, in order to improve the data transmission rate, it would be desirable to use frequencies ranging from 150 kHz up to 30 MHz. Since, however, the frequency range from 150 kHz to 30 MHz is also used by mobile communication networks, there is the danger that the transmission of data using a powerline communication network could cause distortions regarding the reception quality of radio receivers if said data transmission uses a frequency range from 150 kHz up to 30 MHz.

In EP 1 014 640 A2 there is disclosed an Orthogonal Frequency Division Multiplexed (OFDM) communications system comprising a communication station. The communications station includes a an OFDM transmitter comprising an encoder for encoding digital information, a transmission means for transmitting said information and a sub-band allocation means arranged to allocate sub-bands by selecting from a set of pre-determined parameters.

In JP 61 101 126 A there is disclosed a carrier superimposing communication equipment, which minimizes the effect of communication to be inflicted on a wireless interphone by selecting harmonics of a communication carrier frequency so as to be at the outside of a signal frequency band of the wireless interphone.

It is an object of the present invention to provide a method for operating a powerline communication network which enables to avoid distortions regarding the quality of radio receivers even if a powerline communication network is operated in the same time on the basis of frequency ranges coinciding with frequency ranges also used by the radio receivers.

To solve this object, the present invention provides a method for operating a powerline communication network according to claim 1. Further, the present invention provides a radio receiver according to claim 5. In addition, a powerline communication network node according to claim 7 is provided. Further, the invention provides a communication system according to claim 8. Last, a computer program product and a computer-readable storage means according to claims 9 and 10 are provided. Further preferred embodiments of the present invention are defined in the respective subclaims.

Ädditionally, a method for operating a powerline communication network is provided as an example, which is not part of the claimed subject-matter, said powerline communication network having a radio receiver and at least one powerline communication network node being connected via said network with said radio receiver - which comprises the step of supplying frequency information to said at least one network node of said powerline communication network, said frequency information defining the frequency span or frequency range or a plurality thereof needed by said radio receiver to tune or to receive radio signals. Said network nodes are operated in accordance to said frequency information so as to filter said frequency span of said radio receiver and/or to communicate with each other at most at complementary frequency spans and/or at frequencies lying outside said frequency span or said frequency ranges of said radio receiver. Thereby, the reception quality of said radio receiver is improved.

An important aspect is that the network nodes (at least one network node) of said powerline communication network are "informed" which frequency ranges are needed by the radio receiver in order to perform the reception of radio signals. The powerline communication network nodes "react" on this informing process as follows: All further data transmission between the network nodes themselves or a network node and the radio receiver is performed only at frequencies lying outside of the frequency ranges currently needed by the radio receiver. Thus, it is not possible that the radio receiver as well as the powerline communication network simultaneously use the same frequency ranges. This means that the powerline communication network cannot cause any distortions within radio signals received by the radio receiver.

Preferably, the frequency ranges are varying or are varied dynamically in dependence of changing frequency demands of said radio receiver. For example, the radio receiver may at first receive radio signals lying within a frequency range A. Therefore, frequency information defining the frequency range A is supplied to the network nodes of the powerline communication network. In response to this information process, the network nodes communicate with each other only at frequencies lying outside of frequency range A. Then, the radio signals received by the radio receiver may lie within a frequency range B. Therefore, frequency information defining the frequency range are supplied to the network nodes. In response to this information process, the network nodes communicate with each other only at frequencies lying outside of frequency range B. At this time, frequencies lying within the frequency range A may be reused by the network nodes (as long as they do not overlap with the frequencies of the frequency range B). Alternatively, the frequencies lying with the frequency range A may be only "freed" (i.e. reused by the network nodes) if respective "reuse information" is supplied to the network nodes.

The frequency information may be supplied to the network nodes using a powerline communication modem. The powerline communication modem also connects the powerline communication network nodes with the radio receiver. This powerline communication modem may for example be located within the radio receiver itself. Alternatively, it may be located in any other device like a personal computer, a handheld or the like. The frequency information is preferably generated by the radio receiver and then supplied to the powerline communication modem. For example, a processor of the radio receiver may generate the frequency information and supply this information to the powerline communication modem which then broadcasts the frequency information to the network nodes. The frequency information may contain information instructing the powerline communication modem to supply the frequency information only to specific network nodes. Thus, not the whole powerline communication network has to change its communication behaviour, but only a part which is relevant with respect to a specific radio receiver.

If the radio receiver is not capable of communicating with a powerline communication modem itself, the frequency information may also be generated by a user using an input interface (like a personal computer or command elements at the powerline communication modem itself). Then, the frequency information generated is supplied from the input interface to the powerline communication modem which broadcasts the frequency information to the network nodes. Alternatively, the input interface may be directly connected to a network nodes of the powerline communication network.

The frequency information preferably comprises explicit frequency ranges. However, the frequency information may also comprise lists of frequently used channels which may then be converted into concrete frequency ranges within the network nodes.

To enable the above-described method, a radio receiver is provided as an example, which is not part of the claimed subject-matter, comprising means for generating frequency information defining a frequency span or a frequency range or a plurality thereof needed by the radio receiver to receive radio signals, and a powerline communication modem being connected to the means for generating frequency information and being adapted to be connected to at least one network node of a powerline communication modem being connected to the means for generating frequency information and to at least one network node of a powerline communication network, wherein the powerline communication modem is capable of forwarding the frequency information to the network nodes of the powerline communication network.

The means for generating frequency information is preferably constituted by a tuner processing unit and/or a user input interface enabling a user to directly input frequency information.

Further, a powerline communication network node is provided as an example, which is not part of the claimed subject-matter, comprising means for receiving frequency information defining a frequency span, a frequency range or a plurality thereof, wherein the power line communication network node comprises means for adapting its operation in accordance to said frequency information so as to filter said frequency span and/or to communicate at most a complementary frequency spans and/or at frequencies lying out of the frequency span or said frequency ranges.

Further, a communication system is provided as an example, which is not part of the claimed subject-matter, comprising:
- the radio receiver,
- at least one powerline communication network node being a part of a powerline communication, wherein the powerline communication modem is connected to said at least powerline communication node via the powerline communication network.

Further preferred examples, features and advantages will be explained in the following description while making reference to the accompanying drawings wherein:
- **Fig. 1**: shows a preferred example of a communication system.
- **Fig. 2**: shows a first example of the method.
- **Fig. 3**: shows a second example of a method.
- **Fig. 4**: shows a third example of the method.
- **Fig. 5**: shows a fourth example of the method.

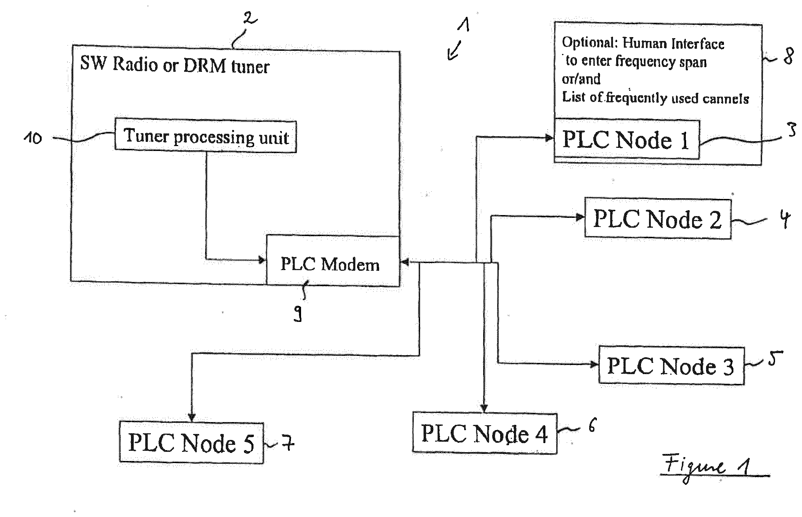

As can be taken from Fig. 1, an example of a communication system 1 comprises a radio receiver 2, for example a short-wave (SW) radio receiver or a digital radio mondial (DRM) receiver, a first to fifth powerline communication network node 3 to 7, a user interface 8, a powerline communication modem 9, and a tuner processing unit 10.

The powerline communication modem 9 and the tuner processing unit 10 are located within the radio receiver 2. The first powerline communication network node 3 is connected to the user interface 8. The first to fifth powerline communication network nodes 3 to 7 are connected with each other and are also connected with the powerline communication modem 9. The first to fifth power line communication network nodes 3 to 7 represent a powerline communication network (which is not completely shown here).

The first to fifth power line communication nodes 3 to 7 are supplied with frequency information either via the powerline communication modem 9 which broadcasts the frequency information to all powerline communication network nodes 3 to 7 (or directly sends this frequency information to specific power line communication), or via the user interface 8. In the latter case, the frequency information supplied only to the first powerline communication network node 3 at first, which then may broadcast the frequency information to the rest of the powerline communication network nodes 4 to 7.

The frequency information may be generated by the tuner processing unit 10 and then be supplied to powerline communication modem 9. Alternatively, the frequency information is generated by a user using the user interface 8.

The frequency information defines frequency ranges which are needed by the radio receiver 2 to receive radio signals. The first to fifth powerline communication network nodes 3 to 7 communicate with each other (or with the powerline communication modem 9) only at frequencies lying outside of the frequency ranges needed by the radio receiver to receive the radio signals. Since these frequency ranges normally change over time (for example due to a tuning process within the radio receiver 2), the powerline communication network nodes 3 to 7 comprise means for adapting their communication (to use only frequencies lying out of the frequency ranges) on demand.

In the following description, several examples will be given about how the powerline communication network nodes 3 to 7 react on different frequency information.

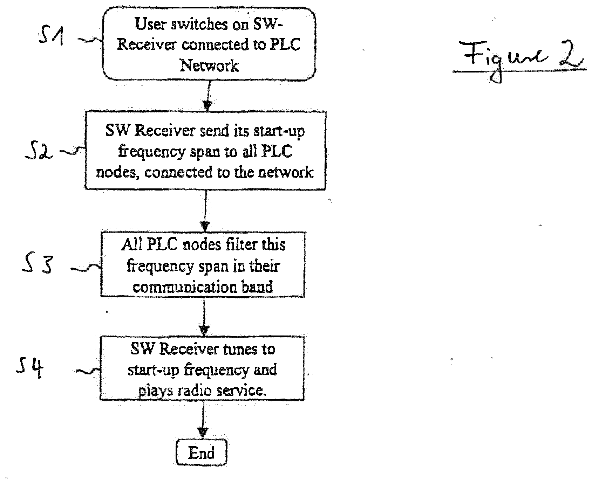

Fig. 2 shows the working mechanism of the communication system 1 in a state when the radio receiver 2 is switched on.

In a first step S1, the user switches the radio receiver 2 (here: the SW-receiver as an example) on. The radio receiver 2 which is connected to the powerline communication network (in particular to the first to fifth powerline communication network nodes 3 to 7) via the powerline communication modem 9 since in a second step S2 it starts up frequency span to all powerline communication network nodes connected to the powerline communication network (i.e. here: the first to fifth powerline communication network nodes 3 to 7). The powerline communication network nodes 3 to 7 filter this frequency span in their communication band in a third step S3 which means that no frequencies lying within said frequency span are used during a powerline communication process. Then, in a fourth step S4, the radio receiver 2 tunes to a start-up frequency lying within the start-up frequency span and plays a corresponding radio service. Since this start-up frequency is not used during a powerline communication process, no distortions within radio signals can be caused by the powerline communication network.

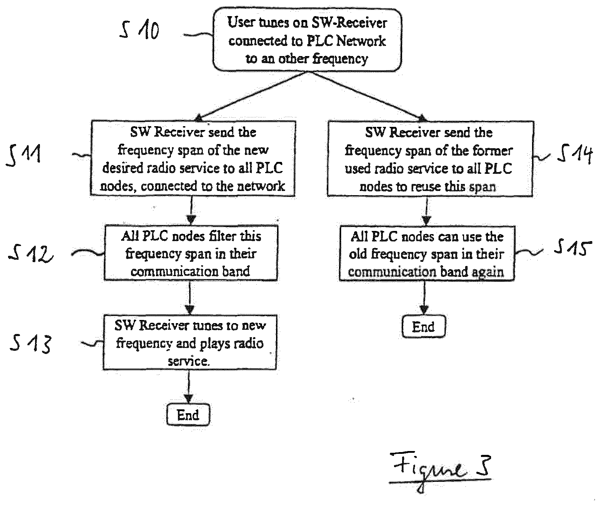

After the radio receiver 2 has been switched on, there may be the case that the user of the radio receiver 2 tunes from the start-up frequency to another frequency in order to change the radio services. This scenario will be described while making reference to Fig. 3.

In a first step S10, the user tunes the radio receiver 2 from the start-up frequency to another frequency. The radio receiver 2 in response sends in a second step S 11 a frequency span containing the frequency of the new desired radio service to all powerline communication network nodes 3 to 7. The powerline communication network nodes 3 to 7 filter this frequency span in their communication band in a third step S12. As soon as this filtering process has been completed, the radio receiver 2 tunes to the new frequency corresponding to the new desired radio service and plays this service in a fourth step S 13. In addition, the radio receiver 2 informs all powerline communication network nodes 3 to 7 that the frequency span "blocked" during the time the first radio service was played can be reused in a fifth step S14. In response thereto, all powerline communication network use can then reuse the old frequency span in their communication band again in a sixth step S15.

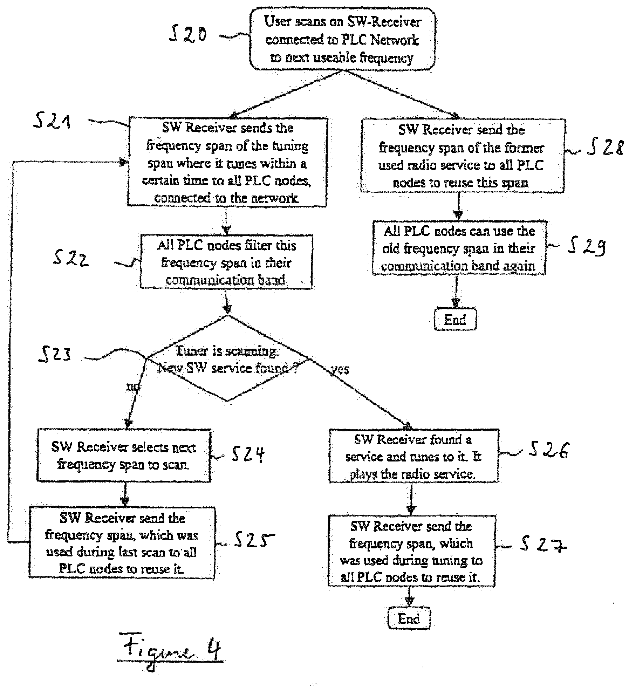

If a user scans on the radio receiver 2 to the next usable frequency, the following scenario applies which will be described while making reference to Fig. 4.

A user scans on the radio receiver 2 to the next usable frequency in a first step S20. Then, in a second step S21, the radio receiver 2 sends a frequency span where it currently tunes within a certain time to the powerline communication network nodes 3 to 7. Then, in a third step S22, all powerline communication network nodes 3 to 7 filter this frequency span in their communication band, i.e. they do not use this frequency span when communicating between the powerline communication network nodes.

The radio receiver (the tuner unit) judges in a fourth step S23, if already a new radio service has been found. If no new radio service has been found, the radio receiver 2 chooses a new frequency span and scans this frequency span for a new usable frequency in a fifth step S24. Then, the radio receiver 2 sends the frequency span which had been last scanned for a new usable frequency to all powerline communication network nodes 3 to 7 in order to free this frequency span. This is done in a sixth step S25. After this step, the radio receiver 2 returns to the second step S21 and executes the third and the fourth step S22, S23 as long a new usable frequency has been found. If this is the case, then the radio receiver 2 tunes to the radio service corresponding to the new frequency in a seventh step S26. Then, the radio receiver 2 sends the complete frequency span which was used during the tuning process to all power line communication network nodes 3 to 7 to reuse it (except of the frequency corresponding to the new service being played). This is done in an eighth step S27. In addition to the first step S21, the radio receiver 2 sends in a ninth step S28 the frequency span of the former user radio service (radio service which was played before the tuning process) to all powerline communication network nodes 3 to 7. Then, in a tenth step S29, all powerline communication network nodes 3 to 7 can use this old frequency span in their communication band again.

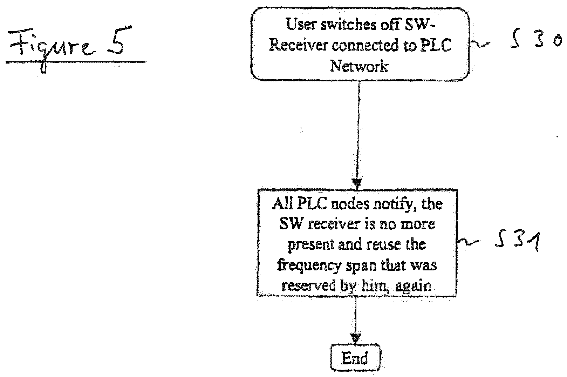

If the radio receiver 2 is switched off, the scenario as described by Fig. 5 applies, which will be described now.

If a user switches the radio receiver off in a first step S30, all powerline communication network nodes 3 to 7 are informed (or notify itself) that the radio receiver 2 is no more present. In response to this information process, all power line communication network nodes 3 to 7 reuse the frequency span that was reserved by the radio receiver 2. This is done in a second step S31.

In the sense of the invention the term "powerline communication network" refers to an entire network, for example all powerline communication network nodes.

As has become apparent, the radio receiver 2 sends via its powerline communication modem 9 to all powerline communication network nodes 3 to 7 the frequency span where the radio is actually tuning. This means if the radio is tuned to a fixed channel or to a range of channels in order to support alternative frequency switching, it sends the frequency of the channel(s) and the bandwidth of demodulation. If the radio receiver 2 is tuning or scanning the complete band to search for available radio stations, it sends the start and stop frequency of the scan to the powerline communication modem 9. The powerline communication modem 9 forwards the information of the frequency spectrum that has to be cleaned to all powerline communication network nodes 3 to 7. All powerline communication network nodes 3 to 7 have to filter this frequency span in their communication spectrum. So there are no unwanted distortions by powerline communication to radio reception.

Receivers being not aware of this invention or portable receivers may not be equipped with a powerline communication modem 9. So there may be a human interface at any other device embedded with a powerline communication modem. The user may enter the frequency and the span of the channel that the receiver is tuned to and all powerline communication modems shall not use for powerline communication.

Additionally, there may be a selection of frequently used channels predefined in one or all powerline communication modems. So their frequencies are filtered automatically.

Further examples are described in the following clauses:
Clause 1: Method for operating a powerline communication network,
   said powerline communication network having a radio receiver (2) and at least one powerline communication network node (3 to 7) being connected via said network with said radio receiver (2), comprising the steps of:
   - supplying frequency information to said at least one network node (3 to 7) of said powerline communication network, said frequency information defining the frequency span or frequency range or a plurality thereof needed by said radio receiver (2) to tune or to receive radio signals,
   - wherein said network nodes (3 to 7) are operated in accordance to said frequency information so as to filter said frequency span of said radio receiver (2) and/or to communicate with each other at most at complementary frequency spans and/or at frequencies lying outside said frequency span or said frequency ranges of said radio receiver (2),
   - thereby improving the reception quality of said radio receiver (2).
Clause 2: Method according to clause 1, wherein said frequency ranges are varied dynamically in dependence of changing frequency demands of said radio receiver (2).
Clause 3: Method according to anyone of the preceding clauses, comprising using a powerline communication modem (9) in order to connect said powerline communication network nodes (3 to 7) to said radio receiver (2) and/or to supply said frequency information to said powerline communication network nodes (3 to 7).
Clause 4: Method according to anyone of the preceding clauses, wherein said frequency information is generated at least in part by said radio receiver (2) and then supplied to said powerline communication modem (9).
Clause 5: Method according to anyone of the preceding clauses, wherein said frequency information is generated at least in part by or received from a user input interface (8) and then supplied to said powerline communication modem (9).
Clause 6: Radio receiver (2) comprising
   - means for generating frequency information (10) defining the frequency span or frequency range or a plurality thereof needed by said radio receiver (2) to tune or to receive radio signals,
   - a powerline communication modem (9) being connected to said means for generating frequency information (10) and being adapted to be connected to at least one network node (3 to 7) of a powerline communication network,
   - wherein said power line communication modem (9) is capable of forwarding said frequency information to network nodes (3 to 7) to be connected thereto.
Clause 7: Radio receiver (2) according to clause 6, wherein said means for generating frequency information (10) is a tuner processing unit and/or a user input interface (8).
Clause 8: Powerline communication network node (3 to 7) comprising
   - means for receiving frequency information defining the frequency span or frequency range or a plurality thereof and
   - comprising means for adapting its operation in accordance to said frequency information so as to filter said frequency span and/or to communicate only at complementary frequency spans and/or at frequencies lying outside said frequency span or said frequency ranges.
Clause 9: Communication system (1), comprising:
   - a radio receiver (2) according to any one of clauses 6 and 7,
   - at least one powerline communication network node (3 to 7) being part of a powerline communication network according to clause 8,
   - wherein said powerline communication modem (9) is connected to said at least one powerline communication network node (3 to 7) via said powerline communication network.
Clause 10: Computer program product comprising computer program means adapted to perform or realize the method according to anyone of the clauses 1 to 5 when it is executed on a computer, a digital signal processing means or the like.
Clause 11: Computer readable storage means adapted to store a computer program product according to clause 10.

## Claims

1. Method for operating a powerline communication network on the basis of frequency ranges coinciding with frequency ranges also used by radio receivers (2), said powerline communication network having powerline communication network nodes (3 to 7) being connected via said network, the method comprising the steps of:
- supplying frequency reuse information by using the powerline communication network to said network nodes (3 to 7) of said powerline communication network, said frequency reuse information defining a frequency range previously reserved for use by said radio receivers to receive radio signals and wherein said network nodes were previously operated so as to communicate with each other at frequencies lying outside said frequency range of said radio receivers,
- wherein said network nodes (3 to 7) are currently operated in accordance to said frequency reuse information so as to communicate with each other at frequencies indicated by the frequency reuse information.

2. Method according to anyone of the preceding claims,
**characterized by**
using a powerline communication modem (9) in order to connect said powerline communication network nodes (3 to 7) to a radio receiver (2) of said radio receivers to supply said frequency reuse information to said powerline communication network nodes (3 to 7).

3. Method according to anyone of the preceding claims,
**characterized in that**
said frequency reuse information is generated at least in part by a radio receiver (2) of said radio receivers and then supplied to said powerline communication modem (9).

4. Method according to anyone of the preceding claims,
**characterized in that**
said frequency reuse information is generated at least in part by or received from a user input interface (8) and then supplied to said powerline communication modem (9).

5. Radio receiver (2),
comprising
- means for generating frequency reuse information (10) indicative of frequencies lying within a frequency range previously used by radio receivers and to be frequency reused for powerline communication,
- a powerline communication modem (9) being connected to said means for generating frequency reuse information (10) and being adapted to be connected to network nodes (3 to 7) of a powerline communication network,
- wherein said power line communication modem (9) is adapted to forward said frequency reuse information to said network nodes (3 to 7) to be connected thereto, so that said network nodes (3 to 7) are operated in accordance to said frequency reuse information so as to communicate with each other at frequencies indicated by the frequency reuse information.

6. Radio receiver (2) according to claim 5,
**characterized in that**
said means for generating frequency reuse information (10) is a tuner processing unit (10).

7. Powerline communication network node (3 to 7) configured to be part of a powerline communication network having powerline communication network nodes (3 to 7) being connected via said network, said network operating on the basis of frequency ranges coinciding with frequency ranges also used by radio receivers,
comprising:
- means for receiving frequency reuse information by using the powerline communication network indicative of frequencies lying within a frequency range previously used by radio receivers and to be reused for powerline communication by said network nodes, said frequency reuse information defining a frequency range previously reserved for use by said radio receivers to receive radio signals and wherein said network nodes were previously operated so as to communicate with each other at frequencies lying outside said frequency range of said radio receivers,
- comprising means for adapting its operation in accordance to said frequency reuse information so as to communicate with other powerline communication network nodes (3 to 7) at frequencies indicated by the frequency reuse information.

8. Communication system (1).
comprising:
- the radio receiver (2) according to any one of claims 5 and 6,
- at least one powerline communication network node (3 to 7) according to claim 7.
- wherein said powerline communication modem (9) is connected to said at least one powerline communication network node (3 to 7) via a powerline communication network.

9. Computer program product comprising computer program means adapted to perform or realize the method according to anyone of the claims 1 to 4 when executed on a computer.

10. Computer readable storage means adapted to store the computer program product according to claim 9.

## Patentansprüche

1. Verfahren zum Betrieb eines Stromleitungs-Kommunikationsnetzes auf der Basis von Frequenzbereichen, die mit Frequenzbereichen zusammenfallen, die auch von Funkempfängern (2) verwendet werden, wobei das Stromleitungs-Kommunikationsnetz Stromleitungs-Kommunikationsnetzknoten (3 bis 7) aufweist, die über das Netz verbunden sind, wobei das Verfahren die folgenden Schritte aufweist:
- Leiten von Frequenzwiederverwendungsinformationen zu den Netzknoten (3 bis 7) des Stromleitungs-Kommunikationsnetzes durch Verwendung des Stromleitungs-Kommunikationsnetzes, wobei die Frequenzwiederverwendungsinformationen einen zuvor für Verwendung durch die Funkempfänger zum Empfangen von Funksignalen reservierten Frequenzbereich definieren und wobei die Netzknoten zuvor betrieben wurden, um auf Frequenzen miteinander zu kommunizieren, die außerhalb des Frequenzbereichs der Funkempfänger liegen,
- wobei die Netzknoten (3 bis 7) aktuell gemäß den Frequenzwiederverwendungsinformationen betrieben werden, um auf Frequenzen miteinander zu kommunizieren, die durch die Frequenzwiederverwendungsinformationen angegeben werden.

2. Verfahren nach einem der vorhergehenden Ansprüche,
**gekennzeichnet durch**
Verwenden eines Stromleitungs-Kommunikationsmodems (9), um die Stromleitungs-Kommunikationsnetzknoten (3 bis 7) mit einem Funkempfänger (2) der Funkempfänger zu verbinden, um die Frequenzwiederverwendungsinformationen zu dem Stromleitungs-Kommunikationsnetzknoten (3 bis 7) zu leiten.

3. Verfahren nach einem der vorhergehenden Ansprüche,
**dadurch gekennzeichnet, dass**
die Frequenzwiederverwendungsinformationen mindestens teilweise durch einen Funkempfänger (2) der Funkempfänger erzeugt und dann zu dem Stromleitungs-Kommunikationsmodem (9) geleitet werden.

4. Verfahren nach einem der vorhergehenden Ansprüche,
**dadurch gekennzeichnet, dass**
die Frequenzwiederverwendungsinformationen mindestens teilweise durch eine Benutzereingabeschnittstelle (8) erzeugt oder empfangen und dann zu dem Stromleitungs-Kommunikationsmodem (9) geleitet werden.

5. Funkempfänger (2),
der Folgendes aufweist:
- Mittel zum Erzeugen von Frequenzwiederverwendungsinformationen (10), die Frequenzen angeben, die in einem zuvor von Funkempfängern verwendeten Frequenzbereich liegen und für Stromleitungskommunikation wiederverwendete Frequenz sein sollen,
- ein Stromleitungs-Kommunikationsmodem (9), das mit den Mitteln zum Erzeugen von Frequenzwiederverwendungsinformationen (10) verbunden ist und dafür ausgelegt ist, mit Netzknoten (3 bis 7) eines Stromleitungs-Kommunikationsnetzes verbunden zu werden,
- wobei das Stromleitungs-Kommunikationsmodem (9) dafür ausgelegt ist, die Frequenzwiederverwendungsinformationen zu den Netzknoten (3 bis 7) weiterzuleiten, um mit ihnen verbunden zu werden, so dass die Netzknoten (3 bis 7) gemäß den Frequenzwiederverwendungsinformationen betrieben werden, um auf Frequenzen miteinander zu kommunizieren, die durch die Frequenzwiederverwendungsinformationen angegeben werden.

6. Funkempfänger (2) nach Anspruch 5,
**dadurch gekennzeichnet, dass**
die Mittel zum Erzeugen von Frequenzwiederverwendungsinformationen (10) eine Tuner-Verarbeitungseinheit (10) sind.

7. Stromleitungs-Kommunikationsnetzknoten (3 bis 7), der dafür ausgelegt ist, Teil eines Stromleitungs-Kommunikationsnetzes zu sein, das Stromleitungs-Kommunikationsnetzknoten (3 bis 7) aufweist, die über das Netz verbunden sind, wobei das Netz auf der Basis von Frequenzbereichen arbeitet, die mit auch von Funkempfängern verwendeten Frequenzbereichen zusammenfallen,
und Folgendes aufweist:
- Mittel zum Empfangen von Frequenzwiederverwendungsinformationen durch Verwendung des Stromleitungs-Kommunikationsnetzes, die Frequenzen angeben, die in einem zuvor von Funkempfängern verwendeten Frequenzbereich liegen und für Stromleitungs-Kommunikation durch die Netzknoten wiederverwendet werden sollen, wobei die Frequenzwiederverwendungsinformationen einen zuvor für Verwendung durch die Funkempfänger zum Empfangen von Funksignalen reservierten Frequenzbereich definieren und wobei die Netzknoten zuvor so betrieben wurden, dass sie auf Frequenzen miteinander kommunizieren, die außerhalb des Frequenzbereichs der Funkempfänger liegen,
- Mittel zum Anpassen seines Betriebs gemäß den Frequenzwiederverwendungsinformationen, um auf Frequenzen mit anderen Stromleitungs-Kommunikationsnetzknoten (3 bis 7) zu kommunizieren, die durch die Frequenzwiederverwendungsinformationen angegeben werden.

8. Kommunikationssystem (1),
das Folgendes aufweist:
- den Funkempfänger (2) nach einem der Ansprüche 5 und 6,
- mindestens einen Stromleitungs-Kommunikationsnetzknoten (3 bis 7) nach Anspruch 7,
- wobei das Stromleitungs-Kommunikationsmodem (9) über ein Stromleitungs-Kommunikationsnetz mit dem mindestens einen Stromleitungs-Kommunikationsnetzknoten (3 bis 7) verbunden ist.

9. Computerprogrammprodukt mit Computerprogrammmitteln, die dafür ausgelegt sind, das Verfahren nach einem der Ansprüche 1 bis 4 auszuführen oder zu realisieren, wenn sie auf einem Computer ausgeführt werden.

10. Computerlesbares Speichermittel, das dafür ausgelegt ist, das Computerprogrammprodukt nach Anspruch 9 zu speichern.

## Revendications

1. Procédé de fonctionnement d'un réseau de communication par courants porteurs sur la base de plages de fréquences coïncidant avec des plages de fréquences également utilisées par des récepteurs radio (2), ledit réseau de communication par courants porteurs ayant des noeuds de réseau de communication par courants porteurs (3-7) qui sont connectés par l'intermédiaire dudit réseau, le procédé comprenant les étapes consistant à :
fournir une information de réutilisation de fréquence, au moyen du réseau de communication par courants porteurs, auxdits noeuds de réseau (3-7) dudit réseau de communication par courants porteurs, ladite information de réutilisation de fréquence définissant une plage de fréquences réservée précédemment en vue de son utilisation par lesdits récepteurs radio pour recevoir des signaux radio, et lesdits noeuds de réseau fonctionnant précédemment pour communiquer les uns avec les autres à des fréquences qui sont comprises hors de ladite plage de fréquences desdits récepteurs radio,
lesdits noeuds de réseau (3-7) fonctionnant simultanément selon ladite information de réutilisation de fréquence pour communiquer les uns avec les autres à des fréquences indiquées par l'information de réutilisation de fréquence.

2. Procédé selon l'une quelconque des revendications précédentes, **caractérisé par** l'étape consistant à :
utiliser un modem de communication par courants porteurs (9) afin de connecter lesdits noeuds de réseau de communication par courants porteurs (3-7) à un récepteur radio (2) desdits récepteurs radio pour fournir ladite information de réutilisation de fréquence auxdits noeuds de réseau de communication par courants porteurs (3-7).

3. Procédé selon l'une quelconque des revendications précédentes, **caractérisé en ce que** :
ladite information de réutilisation de fréquence est générée, au moins en partie, par un récepteur radio (2) desdits récepteurs radio, puis fournie audit modem de communication par courants porteurs (9).

4. Procédé selon l'une quelconque des revendications précédentes, **caractérisé en ce que** :
ladite information de réutilisation de fréquence est générée, au moins en partie, par une interface d'entrée d'utilisateur (8) ou reçue en provenance de celle-ci, puis fournie audit modem de communication par courants porteurs (9).

5. Récepteur radio (2), comprenant :
un moyen (10) permettant de générer une information de réutilisation de fréquence représentative de fréquences qui sont comprises dans une plage de fréquences qui a été utilisée précédemment par des récepteurs radio et qui doit être réutilisée en fréquence par une communication par courants porteurs ; et
un modem de communication par courants porteurs (9), connecté audit moyen de génération d'information de réutilisation de fréquence (10) et conçu pour être connecté à des noeuds de réseau (3-7) d'un réseau de communication par courants porteurs,
ledit modem de communication par courants porteurs (9) étant conçu pour transférer ladite information de réutilisation de fréquence auxdits noeuds de réseau (3-7) qui doivent être connectés audit modem, de sorte que lesdits noeuds de réseau (3-7) fonctionnent selon ladite information de réutilisation de fréquence pour communiquer les uns avec les autres à des fréquences indiquées par l'information de réutilisation de fréquence.

6. Récepteur radio (2) selon la revendication 5, **caractérisé en ce que** :
ledit moyen de génération d'information de réutilisation de fréquence (10) est une unité de traitement de syntoniseur (10).

7. Noeud de réseau de communication par courants porteurs (3-7), configuré pour faire partie d'un réseau de communication par courants porteurs ayant des noeuds de réseau de communication par courants porteurs (3-7) connectés par l'intermédiaire dudit réseau, ledit réseau fonctionnant sur la base de plages de fréquences coïncidant avec des plages de fréquences également utilisées par des récepteurs radio, ledit noeud de réseau de communication par courants porteurs comprenant :
un moyen permettant de recevoir une information de réutilisation de fréquence, au moyen du réseau de communication par courants porteurs, représentative de fréquences qui sont comprises dans une plage de fréquences qui a été utilisée précédemment par des récepteurs radio et qui doit être réutilisée pour une communication par courants porteurs par lesdits noeuds de réseau, ladite information de réutilisation de fréquence définissant une plage de fréquences réservée précédemment en vue de son utilisation par lesdits récepteurs radio pour recevoir des signaux radio, et lesdits noeuds de réseau fonctionnant précédemment pour communiquer les uns avec les autres à des fréquences qui sont comprises hors de ladite plage de fréquences desdits récepteurs radio ; et
un moyen capable d'adapter son fonctionnement selon ladite information de réutilisation de fréquence pour communiquer avec d'autres noeuds de réseau de communication par courants porteurs (3-7) à des fréquences indiquées par l'information de réutilisation de fréquence.

8. Système de communication (1), comprenant :
le récepteur radio (2) selon l'une quelconque des revendications 5 et 6 ; et
au moins un noeud de réseau de communication par courants porteurs (3-7) selon la revendication 7,
ledit modem de communication par courants porteurs (9) étant connecté audit au moins un noeud de réseau de communication par courants porteurs (3-7) par l'intermédiaire d'un réseau de communication par courants porteurs.

9. Produit de programme informatique comprenant un moyen formant programme informatique conçu pour mettre en oeuvre ou réaliser le procédé selon l'une quelconque des revendications 1 à 4 lorsqu'il est exécuté sur un ordinateur.

10. Moyen de stockage lisible par ordinateur, conçu pour stocker le produit de programme informatique selon la revendication 9.
